# EUROPÄISCHE PATENTSCHRIFT

(11) **EP 3 627 033 B1**
(45) Veröffentlichungstag und Bekanntmachung des Hinweises auf die Patenterteilung: **05.07.2023**
(21) Anmeldenummer: 19176193.1
(22) Anmeldetag: 23.05.2019
(51) Int. Cl.: F16P 3/14

(54) **VORRICHTUNG ZUR ABSICHERUNG EINES GEFAHRENBEREICHS EINER ANLAGE**
DEVICE FOR PROTECTING A HAZARDOUS AREA OF A SYSTEM
DISPOSITIF DE SÉCURISATION D'UNE ZONE À RISQUE D'UNE INSTALLATION

(30) Priorität: 24.09.2018 DE 202018105474 U
(43) Veröffentlichungstag der Anmeldung: 25.03.2020
(73) Patentinhaber: Leuze electronic GmbH + Co. KG, 73277 Owen/Teck (DE)
(72) Erfinder: Brunner, Rolf, 82223 Eichenau (DE)
(74) Vertreter: Ruckh, Rainer Gerhard

(56) Entgegenhaltungen:
- EP-A2- 1 306 603
- WO-A1-2009/155948
- DE-A1- 10 304 054
- DE-U1-202009 012 589

## Beschreibung

Die Erfindung betrifft eine Vorrichtung zur Absicherung eines Gefahrenbereichs einer Anlage.

Derartige Vorrichtungen werden im Bereich der Sicherheitstechnik eingesetzt, um Personen und Objekte vor einem gefahrbringenden Betrieb, insbesondere gefahrbringenden Bewegungen von Teilen der Anlage, zu schützen.

Zur Absicherung des Gefahrenbereichs einer Anlage weist die Vorrichtung bekanntermaßen eine Sensoranordnung auf, mit der ein Schutzbereich überwacht wird, der an den Gefahrenbereich angepasst ist. Die Sensoranordnung weist einen fehlersicheren Aufbau auf, so dass sie die Anforderungen der relevanten Sicherheitsnormen für eine Gefahrenbereichsüberwachung erfüllt. Mit der Sensoranordnung wird eine Sicherheitsfunktion derart realisiert, dass dann, wenn mit dieser ein Objekteingriff im Schutzbereich registriert wird, ein Schaltsignal generiert wird, das zum Stillsetzen des gefahrbringenden Betriebs der Anlage führt. Dabei kann die Anlage komplett stillgesetzt werden, oder von dem Teil der Anlage, von der eine Gefährdung ausgeht.

Nachdem das Objekt, insbesondere eine Person, den Schutzbereich wieder verlassen hat, kann die Anlage wieder in Betrieb gesetzt werden. Bei bekannten Systemen kann der Wiederanlauf der Anlage nur dadurch erfolgen, dass eine Person, die den Gefahrenbereich einsehen kann, ein manuell betätigbares Betätigungselement betätigt.

Das Betätigungselement, das in Form einer Taste oder in Form eines von der Decke eines Raums hängenden Seils, an dem eine Person ziehen muss, um einen Schaltvorgang auszulösen, ist dabei an einem geeigneten Ort nahe aber außerhalb des Gefahrenbereichs angeordnet. Von diesem Ort muss der Gefahrenbereich komplett einsehbar sein.

Das Betätigen des Betätigungselements wird als störend und lästig empfunden, da die jeweilige Person sich zuerst zum Betätigungselement hinbewegen muss, um durch dessen Betätigung den Wiederanlauf der Anlage freizugeben. Andererseits muss sichergestellt sein, dass die Betätigung des Wiederanlaufs nur möglich ist, wenn der Gefahrenbereich frei ist.

Die DE 20 2009 012 589 U1 betrifft einen optoelektronischen Sensor zur Überwachung und optischen Erfassung eines flächigen oder volumenförmigen Schutzbereichs, also Sicherheitsscanner oder Sicherheitskamera, mit einer Empfangseinheit zum Empfang von Empfangslichtstrahlen aus dem Schutzbereich und Erzeugung von Empfangssignalen in Abhängigkeit vom Empfangslicht und mit einer Steuer- und Auswerteeinheit zur Erzeugung eines einem Schaltzustand "Objekt im Schutzbereich" entsprechenden Objektfeststellungssignals in Abhängigkeit der Empfangssignale. Es ist Wenigstens ein Lichtsender vorgesehen, mit dem der Schaltzustand "Objekt im Schutzbereich" im Schutzbereich visuell erkennbar darstellbar ist, wobei der Lichtsender zur Schaltzustandsanzeige einen sichtbaren Sendelichtstrahl in der Richtung, in der das Objekt liegt, aussendet.

Die DE 103 04 054 A1 betrifft einen optischen Sensor zur Erfassung von Objekten in einem Überwachungsbereich mit wenigstens einem Sendelichtstrahlen emittierenden Sender, wenigstens einem Empfangslichtstrahlen empfangenden Empfänger und einer Auswerteeinheit zur Auswertung der am Ausgang des Empfängers anstehenden Empfangssignale. Dabei sind mehrere Sicherheitsschaltausgänge vorgesehen, über welche jeweils ein Schaltsignal zur Steuerung eines Arbeitsgerätes ausgebbar ist. Die Schaltzustände eines Schaltsignals sind jeweils in Abhängigkeit der Detektion eines Objektes innerhalb wenigstens eines Schutzfeldes als Teil des Überwachungsbereichs bestimmt.

Der Erfindung liegt die Aufgabe zugrunde, eine Vorrichtung der eingangs genannten Art bereitzustellen, welche eine erhöhte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Vorrichtung zur Absicherung eines Gefahrenbereichs einer von einer Steuerung gesteuerten Anlage. Mittels einer Sensoranordnung werden zwei an den Gefahrenbereich angepasste Schutzfelder überwacht. Das
zweite Schutzfeld überdeckt das erste Schutzfeld im Eingangsbereich des Gefahrenbereichs. Der Sensoranordnung sind zwei sichere Ausgänge zugeordnet, über welche binäre Schaltsignale ausgegeben sind. Jedem Schutzfeld ist ein sicherer Ausgang derart zugeordnet, dass die Schaltzustände des jeweiligen sicheren Ausgangs angeben, ob das zugeordnete Schutzfeld frei ist oder in diesem ein Objekt vorhanden ist. Ein gleichzeitiger Wechsel der Schaltsignale der sicheren Ausgänge in den Schaltzustand "freies Schutzfeld" bildet ein Triggersignal für einen automatischen Anlauf der Anlage.

Dabei muss generell sichergestellt sein, dass der Gefahrenbereich nur durch den Eingangsbereich betreten und verlassen werden kann, zum Beispiel durch eine Umzäunung oder sonstige Absperrung.

Der Grundgedanke der Erfindung besteht darin, dass mit der Sensoranordnung nicht nur die bekannte Sicherheitsfunktion bereitgestellt wird, dass ein Objekteingriff im Gefahrenbereich festgestellt und so ein Stillsetzen des gefahrbringenden Betriebes der Anlage bewirkt wird, wobei der gefahrbringende Betrieb der Anlage den gesamten Betrieb oder nur einen Teil des Betriebs der Anlage umfassen kann. Erfindungsgemäß wird mit der Sensoranordnung eine zweite Sicherheitsfunktion derart bereitgestellt, dass zuverlässig erfasst wird, wenn ein Objekt den Gefahrenbereich verlässt. Dadurch wird sichergestellt, dass der Gefahrenbereich frei ist und eine vorher bestehende Gefahrensituation aufgehoben ist, so dass mittels der Sensoranordnung ein automatischer Wiederanlauf der Anlage, das heißt ohne manuelle Betätigung eines Betätigungselements erfolgten kann. Mit automatischem Wiederanlauf kann generell eine Wiederaufnahme des gefahrbringenden Bereichs der Anlage oder eine Wiederaufnahme des gesamten Bereichs der Anlage gemeint sein.

Die erfindungsgemäße Vorrichtung arbeitet in symmetrischer Weise derart, dass es sowohl bei erster als auch bei der zweiten Sicherheitsfunktion nicht darauf ankommt, welche Art von Objekt detektiert wird.

Bei einem Objekteingriff im Schutzbereich, der zu einem Abschalten, das heißt Stillsetzen der Anlage führt, spielt es generell keine Rolle, welches Objekt an welchem Ort des Schutzbereichs erfasst wird. Aus Sicherheitsgründen muss nämlich jeder Objekteingriff im Schutzbereich sicher erfasst werden und ein Stillsetzen der Anlage bewirken.

Erfindungsgemäß erfolgt zur Bereitstellung der zweiten Sicherheitsfunktion eine Generierung eines Triggersignals für einen automatischen Anlauf unabhängig von der Art von detektierten Objekten. Einzige Voraussetzung für den automatischen Wiederanlauf ist, dass gleichzeitig in beiden Schutzfeldern ein Verlassen des Objekts detektiert wird, wobei dies in beiden Schutzfeldern gleichzeitig erfolgen muss.

Dabei liegt der Erfindung die Überlegung zugrunde, dass ein Eindringen eines Objekts in den Gefahrenbereich sicher erfasst wird und zu einem Stillsetzen der Anlage führt. Da somit jeder Objekteingriff zu einem Stillsetzen der Anlage führt, unabhängig ob es sich um ein sicherheitsrelevantes Objekt handelt, wie zum Beispiel eine Person, oder um ein nichtsicherheitskritisches Objekt, wie zum Beispiel ein Fahrzeug, ist es ausreichend, wenn das Verlassen des Gefahrenbereichs durch dieses Objekt erkannt wird, um dann einen automatischen Wiederanlauf der Anlage zu ermöglichen.

Entscheidend hierfür ist die erfindungsgemäße Dimensionierung beider Schutzfelder.

Dabei ist die Größe des ersten Schutzfeldes an die Größe des Gefahrenbereichs angepasst.

Insbesondere deckt das erste Schutzfeld den Gefahrenbereich vollständig ab.

Mit diesem Schutzfeld kann der gesamte Gefahrenbereich überwacht werden, so dass das erste Schutzfeld bevorzugt zur Bereitstellung der ersten Sicherheitsfunktion verwendet wird, das heißt die Anlage wird stillgesetzt, wenn ein Objekteingriff im ersten Schutzfeld registriert wird.

Diese Sicherheitsfunktion wird vorteilhaft dadurch erweitert, dass der Betrieb der Anlage stillgesetzt ist, wenn wenigstens ein Schaltsignal den Schaltzustand "Objekt vorhanden" einnimmt, das heißt ein Registrieren eines Objekteingriffs in einem der beiden Schutzfelder reicht aus, die Anlage stillzusetzen.

Das zweite Schutzfeld, das bevorzugt kleiner ist als das erste Schutzfeld, ist so dimensioniert, dass damit der Eingangsbereich des Gefahrenbereichs überwacht werden kann.

Es ist dabei zu beachten, dass der Gefahrenbereich nicht an anderer Stelle als den Eingangsbereich betreten oder verlassen werden kann.

Wesentlich ist, dass das zweite Schutzfeld das erste Schutzfeld im Eingangsbereich überdeckt, wodurch sicher erfasst werden kann, ob ein Objekt den Gefahrenbereich verlässt.

Besonders vorteilhaft fallen die im Eingangsbereich verlaufenden Ränder der Schutzfelder zusammen.

Weiterhin deckt das zweite Schutzfeld nur einen Teil des ersten Schutzfelds ab, wobei vorteilhaft beide Schutzfelder dieselbe Breite aufweisen.

Aufgrund der kleineren Dimension des zweiten Schutzfelds im Vergleich zum ersten Schutzfeld ist es auch vorteilhaft, wenn zur Generierung von Schaltsignalen der sichere Ausgang des zweiten Schutzfelds eine kürzere Ansprechzeit als der sichere Ausgang des ersten Schutzfelds aufweist.

Mit der so gestalteten erfindungsgemäßen Dimensionierung beider Schutzfelder ist es ausreichend, für die Schaltsignale des sicheren Ausgangs beider Schutzfelder eine Gleichzeitigkeitsüberwachung als Kriterium für ein automatisches Wiederanlaufen durchzuführen. Durch die erfindungsgemäße Dimensionierung beider Schutzfelder kann nämlich ein Verlassen des Gefahrenbereichs durch ein Objekt auf sehr einfache Weise dadurch festgestellt werden, dass die Schaltzustände beider sicherer Ausgänge gleichzeitig vom Schaltzustand "Objekt vorhanden" in den Schaltzustand "freies Schutzfeld" wechseln. Eine aufwändige zeitliche Verfolgung von Objekten zur Kontrolle, ob ein solches Objekt den Gefahrenbereich verlässt, ist somit nicht erforderlich.

Die Gleichzeitigkeitsüberwachung erfolgt dabei zweckmäßig innerhalb vorgegebener Toleranzgrenzen, innerhalb derer die Übergänge der Schaltzustände beider sicherer Ausgänge variieren dürfen.

Vorteilhaft erfolgt diese Auswertung in der Steuerung der Anlage, das heißt in der Steuerung ist aus den Schaltsignalen das Triggersignal für den automatischen Wiederanlauf der Anlage gebildet.

Gemäß einer ersten Variante weist die Sensoranordnung als sichere Ausgänge fehlersichere Ausgangsbeschaltungen auf, über welche die Schaltsignale an die Steuerung der Anlage ausgebbar sind.

In diesem Fall sind die sichere Ausgänge als Hardware integraler Bestandteil der Sensoranordnung.

Gemäß einer zweiten Variante weist die Sensoranordnung Feldbusschnittstellen auf, wobei die Schaltsignale als sichere Daten in Feldbustelegrammen an die Steuerung ausgebbar sind.

In diesem Fall bestehen die sichere Ausgänge lediglich aus sicheren Daten, die über den Feldbus übertragen werden.

Da ein automatischer Wiederanlauf der Anlage mittels der Sensoranordnung nur dann freigegeben wird, wenn für Objekte ein gültiges Verlassen des Schutzbereichs erkannt wird, gibt es auch Fallkonstellationen bei einem Herausbewegen eines Objekts aus dem Schutzbereich, die nicht zu einer Generierung des Freigabesignals und damit nicht zu einem automatischen Wiederanlauf der Anlage führen.

Deshalb ist vorteilhaft für einen Wiederanlauf der Anlage ein manuell betätigbares Betätigungselement vorgesehen.

Damit kann in Fällen, in denen kein automatischer Anlauf der Anlage möglich ist, eine Bedienperson in bekannter Weise durch manuelles Betätigen des Betätigungselements die Anlage wieder in Betrieb setzen.

Generell kann die Sensoranordnung einen oder mehrere Sensoren aufweisen.

Vorteilhaft kann der wenigstens eine Sensor als optischer Sensor, insbesondere als Kamera, Flächendistanzsensor oder Lichtvorhang ausgebildet sein. Mit derartigen optischen Sensoren können flächige oder sogar räumliche Bereiche überwacht werden. Damit kann mit diesen Sensoren eine ortsaufgelöste Objektdetektion im gesamten Gefahrenbereich durchgeführt werden.

Die Erfindung wird im Folgenden anhand der Zeichnungen erläutert. Es zeigen:
- Figur 1:: Ausführungsbeispiel einer Vorrichtung zur Absicherung eines Gefahrenbereichs einer Anlage mittels einer Sensoranordnung.
- Figur 2:: Blockschaltbild der Vorrichtung gemäß Figur 1.
- Figur 3:: Zeitdiagramm der Sensoranordnung gemäß Figur 1, wenn die Person den Gefahrenbereich verlässt.
- Figur 4:: Zeitdiagramm des sicheren Ausgangs der Sensoranordnung gemäß Figur 1, wenn die Person den Gefahrenbereich verlässt.

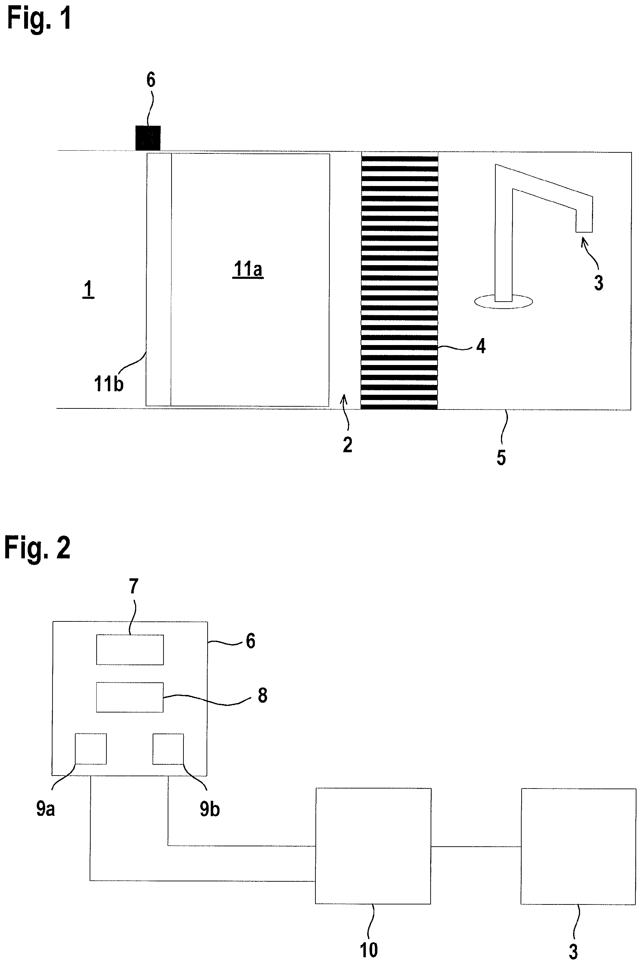

Figur 1 zeigt ein Ausführungsbeispiel einer Vorrichtung 1 zur Absicherung eines Gefahrenbereichs 2 einer Anlage. Die Anlage besteht im vorliegenden Fall aus einem Roboter 3. Für den Roboter 3 ist Arbeitsmaterial 4 bereitgestellt, mit dem der Roboter 3 Arbeitsvorgänge durchführen kann. Dabei können Gefahren für Personen entstehen.

Zur Gefahrenabsicherung ist der Roboter 3 an drei Seiten mit einer Umzäunung 5 umgeben. Der Zugang zum Roboter 3 kann somit über die offene, nicht eingezäunte Frontseite eines schmalen Gangs erfolgen. Dieser dem Roboter 3 vorgelagerte Gang bildet einen Gefahrenbereich 2, der mit einer Sensoranordnung als Bestandteil der Vorrichtung 1 abgesichert wird.

Die den Gefahrenbereich 2 überwachende Sensoranordnung kann einen oder mehrere Sensoren aufweisen. Bei der Ausführungsform der Figur 1 ist die Sensoranordnung von einem optischen Sensor in Form eines Flächendistanzsensors 6 ausgebildet. Ein solcher Flächendistanzsensor 6 weist typisch einen Distanzsensor 7 (Figur 2) mit einem Sendelichtstrahlen emittierenden Sendeelement und einem Empfangslichtstrahlen empfangenden Empfänger auf. Die Distanzmessungen erfolgen zweckmäßig nach einem Impuls-Laufzeit-Verfahren oder einem Phasenmessverfahren. Durch die Integration des Distanzsensors 7 in einen rotierenden Messkopf oder durch das Vorsehen einer rotierenden Ablenkeinheit werden die Sendelichtstrahlen periodisch in einem Abtastbereich geführt, so dass mit dem Flächendistanzsensor 6 der gesamte Gefahrenbereich 2 erfasst wird und im gesamten Gefahrenbereich 2 die Positionen von Objekten bestimmt werden können. Hierzu weist der Flächendistanzsensor 6 eine Auswerteeinheit 8 auf (Figur 2).

Jeder Sensor der Sensoranordnung, damit auch der Flächendistanzsensor 6, bildet einen Sicherheitssensor, der für den Einsatz im Bereich der Sicherheitstechnik geeignet ist und daher einen fehlersicheren Aufbau aufweist. Die erforderliche Fehlersicherheit kann beispielsweise durch eine redundant aufgebaute Auswerteeinheit 8 in Form zweier sich zyklisch gegenseitig überwachenden Rechnereinheiten erreicht werden.

Die Sensoranordnung, im vorliegenden Fall der Flächendistanzsensor 6, ist an eine Steuerung 10 angeschlossen, die die Anlage steuert, wie in Figur 2 schematisch dargestellt.

Figur 2 zeigt schematisch den Flächendistanzsensor 6 mit dem Distanzsensor 7 und der redundanten Auswerteeinheit 8.

Der Flächendistanzsensor 6 weist weiter als sichere Ausgangsbeschaltung zwei Sensoranordnungen in Form von OSSD 9a, 9b, das heißt in Form von hardwaremäßig vorgesehenen Ausgängen auf.

Alternativ könnte die Sensoranordnung eine sichere Feldbusschnittstelle aufweisen, wobei die Schaltsignale als sichere Daten in Feldbustelegrammen an die Steuerung 10 ausgebbar sind.

Die OSSD 9a, 9b sind an eine Steuerung 10 angeschlossen, die den Roboter 3 steuert.

Erfindungsgemäß werden mit dem Flächendistanzsensor 6 zwei Schutzfelder 11a, 11b überwacht, wobei jedem Schutzfeld 11a, 11b ein OSSD 9a, 9b zugeordnet ist. Diese Schutzfelder 11a, 11b sind in Figur 1 dargestellt.

Das erste Schutzfeld 11a erstreckt sich über den gesamten Gefahrenbereich 2. Das zweite Schutzfeld 11b bildet einen Ausschnitt des ersten Schutzfeldes 11b derart, dass das zweite Schutzfeld 11b das erste Schutzfeld 11a im Eingangsbereich des Gefahrenbereichs 2 überdeckt.

Dabei fallen die im Eingangsbereich verlaufenden Ränder der Schutzfelder 11a, 11b zusammen.

Beide Schutzfelder 11a, 11b weisen dieselbe Breite auf und erstrecken sich über die gesamte Breite des Gefahrenbereichs 2.

Mit dem Flächendistanzsensor 6 erfolgt separat in jedem Schutzfeld 11a, 11b eine Objekterfassung. Abhängig von der Objekterfassung werden jeweils binäre Schaltsignale generiert, deren Schaltzustände angeben, ob sich ein Objekt im jeweiligen Schutzfeld 11a, 11b befindet oder nicht, das heißt jedes Schaltsignal kann den Schaltzustand 0 ("Objekt vorhanden") und den Schaltzustand 1 ("Schutzfeld frei") einnehmen. Jedes Schaltsignal für ein Schutzfeld 11a, 11b wird über den zugeordneten OSSD 9a, 9b an die Steuerung 10 ausgegeben.

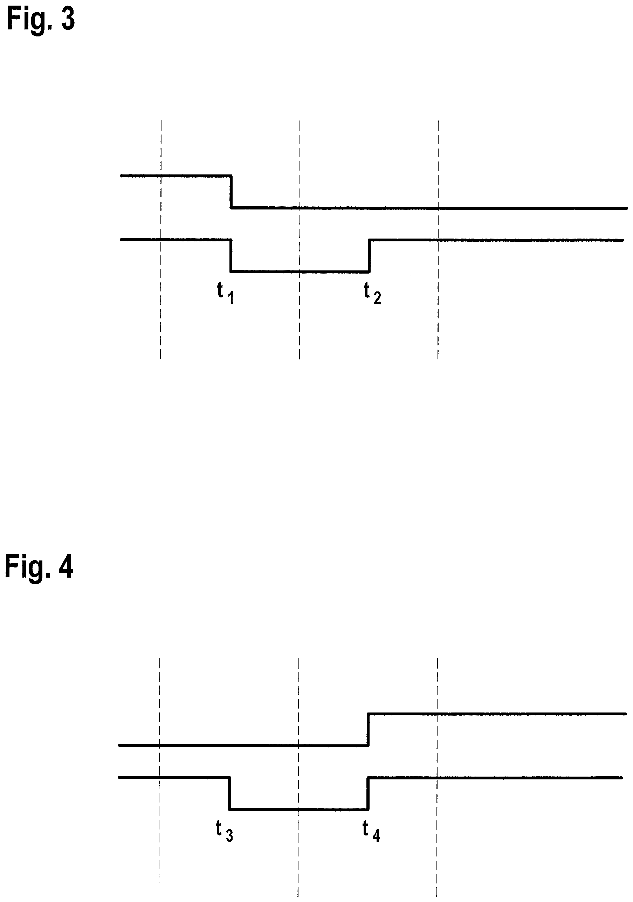

Typische Signalfolgen sind in den Figuren 3 und 4 dargestellt.

Figur 3 zeigt den Fall, wenn eine Person über den Eingangsbereich den Gefahrenbereich 2 betritt und sich dann weiter im Gefahrenbereich 2 in Richtung Roboter 3 bewegt.

Zum Zeitpunkt t₁ betritt die Person den Gefahrenbereich 2 und dringt dabei gleichzeitig in beide Schutzfelder 11a, 11b ein. Demzufolge wechseln beide OSSD 9a, 9b zum Zeitpunkt t₁ ihren Schaltzustand von 1 ("freies Schutzfeld") auf 0 ("Objekt vorhanden"). Diese Schaltzustände bleiben erhalten, solange sich die Person im Schutzfeld 11b (und somit auch im Schutzfeld 11a) befindet.

Zum Zeitpunkt t₂ verlässt die Person das Schutzfeld 11b, bleibt aber im Schutzfeld 11a. Demzufolge wechselt zum Zeitpunkt t₂ der Schaltzustand des OSSD 9b von 0 auf 1, während der Schaltzustand des OSSD 9a unverändert bleibt.

Sobald zum Zeitpunkt t₁ wenigstens eine Schutzfeld-Verletzung festgestellt wird, wird dadurch mit den OSSD 9a, 9b eine erste Sicherheitsfunktion derart bewirkt, dass über die Steuerung 10 die Anlage, das heißt der Roboter 3 stillgesetzt wird, so dass von diesem keine Gefahren mehr ausgehen. Bei dem Beispiel von Figur 3 bleibt nach dem Zeitpunkt t₁ immer wenigstens ein OSSD 9a, 9b im Schaltzustand 0, so dass ab dem Zeitpunkt t₁ die Anlage stillgesetzt bleibt.

Figur 4 zeigt den Fall, wenn eine Person, die sich zunächst in der Nähe des Roboters 3 aufhält, aus dem Gefahrenbereich 2 herausbewegt.

Zunächst (zu Zeiten < t₃) befindet sich die Person nur im Schutzfeld 11a aber nicht im Schutzfeld 11b, so dass nur der OSSD 9a den Schaltzustand 0 aufweist. Da sich wenigstens ein OSSD 9a, 9b im Schaltzustand 0 befindet, ist der Roboter 3 stillgesetzt.

Zum Zeitpunkt t₃ dringt die Person in das Schutzfeld 11b ein, so dass nun beide OSSD 9a, 9b den Schaltzustand 0 einnehmen. Der Roboter 3 bleibt demzufolge stillgesetzt.

Zum Zeitpunkt t₄ verlässt die Person den Gefahrenbereich 2 und damit beide Schutzfelder 11a, 11b. Demzufolge wechseln die OSSD 9a, 9b zum Zeitpunkt t₄ gleichzeitig vom Schaltzustand 0 auf den Schaltzustand 1. Dieser Signalwechsel entspricht einem regulären Verlassen des Gefahrenbereichs 2 durch eine Person. Der gleichzeitige Wechsel der Schaltzustände der OSSD 9a, 9b von 0 auf 1 zum Zeitpunkt t₄ bildet somit ein Triggersignal für einen automatischen Wiederanlauf der Anlage, das heißt des Roboters 3.

### Bezugszeichenliste

- (1): Vorrichtung
- (2): Gefahrenbereich
- (3): Roboter
- (4): Arbeitsmaterial
- (5): Umzäunung
- (6): Flächendistanzsensor
- (7): Distanzsensor
- (8): Auswerteeinheit
- (9a, 9b): OSSD
- (10): Steuerung
- (11a): erstes Schutzfeld
- (11b): zweites Schutzfeld

- t₁ - t₄: Zeitpunkt

## Patentansprüche

1. Vorrichtung (1) zur Absicherung eines Gefahrenbereichs (2) einer von einer Steuerung (10) gesteuerten Anlage, mit einer Sensoranordnung, mittels derer zwei an den Gefahrenbereich (2) angepasste Schutzfelder (11a, 11b) überwacht werden, wobei das zweite Schutzfeld (11b) das erste Schutzfeld (11a) im Eingangsbereich des Gefahrenbereichs (2) überdeckt, wobei der Sensoranordnung zwei sichere Ausgänge zugeordnet sind, über welche binäre Schaltsignale ausgebbar sind, wobei jedem Schutzfeld (11a, 11b) ein sicherer Ausgang derart zugeordnet ist, dass die Schaltzustände des jeweiligen sicheren Ausgangs angeben, ob das zugeordnete Schutzfeld (11a, 11b) frei ist oder in diesem ein Objekt vorhanden ist, **dadurch gekennzeichnet, dass** ein gleichzeitiger Wechsel der Schaltsignale der sicheren Ausgänge in den Schaltzustand "freies Schutzfeld" ein Triggersignal für einen automatischen Anlauf der Anlage bildet.

2. Vorrichtung (1) nach Anspruch 1, **dadurch gekennzeichnet, dass** die im Eingangsbereich verlaufenden Ränder der Schutzfelder (11a, 11b) zusammenfallen.

3. Vorrichtung (1) nach einem der Ansprüche 1 oder 2, **dadurch gekennzeichnet, dass** die Größe des ersten Schutzfeldes (11a) an die Größe des Gefahrenbereichs (2) angepasst ist.

4. Vorrichtung (1) nach Anspruch 3, **dadurch gekennzeichnet, dass** das erste Schutzfeld (11a) den Gefahrenbereich (2) vollständig abdeckt.

5. Vorrichtung (1) nach einem der Ansprüche 1 - 4, **dadurch gekennzeichnet, dass** das zweite Schutzfeld (11b) nur einen Teil des ersten Schutzfelds (11a) abdeckt.

6. Vorrichtung (1) nach einem der Ansprüche 1 - 5, **dadurch gekennzeichnet, dass** beide Schutzfelder (11a, 11b) dieselbe Breite aufweisen.

7. Vorrichtung (1) nach einem der Ansprüche 1 - 6, **dadurch gekennzeichnet, dass** zur Generierung von Schaltsignalen der sichere Ausgang des zweiten Schutzfelds (11b) eine kürzere Ansprechzeit als der sichere Ausgang des ersten Schutzfelds (11a) aufweist.

8. Vorrichtung (1) nach einem der Ansprüche 1 - 7, **dadurch gekennzeichnet, dass** die Sensoranordnung als sichere Ausgänge fehlersichere Ausgangsbeschaltungen aufweist, über welche die Schaltsignale an die Steuerung (10) der Anlage ausgebbar sind.

9. Vorrichtung (1) nach einem der Ansprüche 1 - 7, **dadurch gekennzeichnet, dass** die Sensoranordnung Feldbusschnittstellen aufweist, wobei die Schaltsignale als sichere Daten in Feldbustelegrammen an die Steuerung (10) ausgebbar sind.

10. Vorrichtung (1) nach einem der Ansprüche 1 - 9, **dadurch gekennzeichnet, dass** die Schaltsignale in der Steuerung (10) ausgewertet werden, wobei in der Steuerung (10) aus den Schaltsignalen das Triggersignal für den automatischen Wiederanlauf der Anlage gebildet ist.

11. Vorrichtung (1) nach einem der Ansprüche 1 - 10, **dadurch gekennzeichnet, dass** der Betrieb der Anlage stillgesetzt ist, wenn wenigstens ein Schaltsignal den Schaltzustand "Objekt vorhanden" einnimmt.

12. Vorrichtung (1) nach einem der Ansprüche 1 - 11, **dadurch gekennzeichnet, dass** die Sensoranordnung einen oder mehrere Sensoren aufweist.

13. Vorrichtung (1) nach Anspruch 12, **dadurch gekennzeichnet, dass** der oder wenigstens ein Sensor ein optischer Sensor ist.

14. Vorrichtung (1) nach Anspruch 13, **dadurch gekennzeichnet, dass** der optische Sensor ein Kamera-Sensor, ein Flächendistanzsensor (6) oder ein Lichtvorhang ist.

15. Vorrichtung (1) nach einem der Ansprüche 1 - 14, **dadurch gekennzeichnet, dass** für einen Wiederanlauf der Anlage ein manuell betätigbares Betätigungselement vorgesehen ist.

## Claims

1. A device (1) for protecting a hazardous area (2) of a plant controlled by a controller (10), having a sensor assembly by means of which two protective fields (11a, 11b) adapted to the hazardous area (2) are monitored, the second protective field (11b) covering the first protective field (11a) in the input area of the hazardous area (2), the sensor assembly being assigned two safe outputs via which biological switching signals can be output, wherein a safe output is associated with each protective field (11a, 11b) in such a way that the switching states of the respective safe output indicate whether the associated protective field (11a, 11b) is free or whether an object is present therein, **characterised in that** a simultaneous change of the switching signals of the safe outputs into the switching state "free protective field" forms a trigger signal for an automatic start-up of the installation.

2. A device (1) according to claim 1, **characterised in that** the edges of the protective fields (11a, 11b) extending in the input area coincide.

3. A device (1) according to one of claims 1 or 2, **characterised in that** the size of the first protective field (11a) is adapted to the size of the hazard area (2).

4. A device (1) according to claim 3, **characterised in that** the first protective field (11a) completely covers the danger area (2).

5. A device (1) according to one of the claims 1 to 4, **characterised in that** the second protective field (11b) covers only a part of the first protective field (11a).

6. A device (1) according to one of the claims 1 to 5, **characterised in that** both protective fields (1a, 11b) have the same width.

7. A device (1) according to one of the claims 1 to 6, **characterised in that** for generating switching signals the safe output of the second protective field (Hb) has a shorter response time than the safe output of the first protective field (1a).

8. A device (1) according to one of the claims 1 to 7, **characterised in that** the sensor assembly has fail-safe output circuits as safe outputs, via which the switching signals can be output to the control (10) of the installation.

9. A device (1) according to one of the claims 1 to 7, **characterised in that** the sensor assembly has field bus interfaces, wherein the switching signals can be output as safe data in field bus telegrams to the control (10).

10. A device (1) according to one of claims 1 to 9, **characterised in that** the switching signals are evaluated in the controller (10), wherein the trigger signal for the automatic restart of the system is formed in the controller (10) from the switching signals.

11. A device (1) according to one of claims 1 to 10, **characterised in that** the operation of the installation is stopped when at least one switching signal assumes the switching state "object present".

12. A device (1) according to any one of claims 1 to 11, **characterised in that** the sensor assembly comprises one or more sensors.

13. A device (1) according to claim 12, **characterised in that** the or at least one sensor is an optical sensor.

14. A device (1) according to claim 13, **characterised in that** the optical sensor is a camera sensor, an area distance sensor (6) or a light curtain.

15. A device (1) according to one of the claims 1 to 14, **characterised in that** a manually operable actuating element is provided for restarting the system.

## Revendications

1. Dispositif (1) pour la protection d'une zone à risque (2) d'une installation commandée par un dispositif de commande (10), comportant un ensemble de capteurs permettant de surveiller deux champs de protection (11a, 11b) conçus pour la zone à risque (2), le second champ de protection (11b) recouvrant le premier champ de protection (11a) dans la zone d'entrée de la zone à risque (2), l'ensemble de capteurs étant associé à deux sorties de sécurité par lesquelles des signaux de commutation biologiques peuvent être délivrés, dans lequel une sortie de sécurité est associée à chaque champ de protection (11a, 11b) de telle sorte que les états de commutation de la sortie de sécurité respective indiquent si le champ de protection associé (11a, 11b) est libre ou si un objet s'y trouve, **caractérisé par le fait que** le passage simultané des signaux de commutation des sorties de sécurité à l'état de commutation "champ de protection libre" constitue un signal de déclenchement pour une mise en service automatique de l'installation.

2. Dispositif (1) selon la revendication 1, **caractérisé par le fait que** les bords des champs de protection (11a, 11b) s'étendant dans la zone d'entrée coïncident.

3. Dispositif (1) selon l'une des revendications 1 ou 2, **caractérisé en ce que** la taille du premier champ de protection (11a) est conçue pour la taille de la zone à risque (2).

4. Dispositif (1) selon la revendication 3, **caractérisé en ce que** le premier champ de protection (11a) couvre complètement la zone à risque (2).

5. Dispositif (1) selon l'une des revendications 1 à 4, **caractérisé en ce que** le second champ de protection (11b) ne couvre qu'une partie du premier champ de protection (11a).

6. Dispositif (1) selon l'une des revendications 1 à 5, **caractérisé par le fait que** les deux champs de protection (11a, 11b) ont la même largeur.

7. Dispositif (1) selon l'une des revendications 1 à 6, **caractérisé par le fait que** la sortie sûre du second champ de protection (11b) a un temps de réponse plus court que la sortie sûre du premier champ de protection (11a) pour générer des signaux de commutation.

8. Dispositif (1) selon l'une des revendications 1 à 7, **caractérisé par le fait que** l'ensemble de capteurs possède des circuits de sortie de sécurité en tant que sorties de sécurité, par lesquels les signaux de commutation peuvent être transmis au dispositif de commande (10) de l'installation.

9. Dispositif (1) selon l'une des revendications 1 à 7, **caractérisé en ce que** l'ensemble de capteurs possède des interfaces de bus de terrain, dans lesquelles les signaux de commutation peuvent être émis en tant que données sûres dans des télégrammes de bus de terrain vers le dispositif de commande (10).

10. Dispositif (1) selon l'une des revendications 1 à 9, **caractérisé en ce que** les signaux de commutation sont évalués dans le dispositif de commande (10), dans lequel le signal de déclenchement pour le redémarrage automatique du système est formé dans le dispositif de commande (10) à partir des signaux de commutation.

11. Dispositif (1) selon l'une des revendications 1 à 10, **caractérisé par le fait que** le fonctionnement de l'installation est arrêté lorsqu'au moins un signal de commutation prend l'état de commutation "objet présent".

12. Dispositif (1) selon l'une des revendications 1 à 11, **caractérisé par le fait que** l'ensemble de capteurs comprend un ou plusieurs capteurs.

13. Dispositif (1) selon la revendication 12, **caractérisé par le fait que** le ou au moins un capteur est un capteur optique.

14. Dispositif (1) selon la revendication 13, **caractérisé en ce que** le capteur optique est un capteur de caméra, un capteur de distance de zone (6) ou un rideau lumineux.

15. Dispositif (1) selon l'une des revendications 1 à 14, **caractérisé en ce qu'**un élément d'actionnement manuel est prévu pour redémarrer le système.
